# EUROPEAN PATENT APPLICATION

(11) **EP 1 122 289 A1**
(43) Date of publication of application: **08.08.2001**
(21) Application number: 01300408.0
(22) Date of filing: 18.01.2001
(51) Int. Cl.: C09D 11/10, C09D 183/04

(54) **Ink for silicone rubber, and molded silicone rubber**

(30) Priority: 31.01.2000 JP 2000022623
(71) Applicant: Dow Corning Toray Silicone Co., Ltd., Tokyo (JP)
(72) Inventor: Otomo, Takayoshi, Dow Corning Toray Sil. Co., Ltd., Ichihara-shi, Chiba Prefecture (JP); Nakamura, Akito, Dow Corning Toray Sil. Co., Ltd., Ichihara-shi, Chiba Prefecture (JP)
(74) Representative: Kyle, Diana

(57) **Abstract**

An ink composition for silicone rubber comprising
(A) 100 weight parts organopolysiloxane having at least two silicon atom-bonded alkenyl groups per molecule,
(B) 0.01 to 50 weight parts organic compound having air oxidation-curable unsaturated groups,
(C) an organopolysiloxane having at least two silicon atom-bonded hydrogen atoms per molecule in an amount sufficient to effect curing of the ink composition,
(D) pigment or dye in an amount sufficient to color the ink composition, and
(E) platinum catalyst in an amount sufficient to effect curing of the ink composition; and molded silicone rubber printed with the ink composition.

## Description

The present invention relates to a print ink composition for silicone rubber with improved wearability and a molded silicone rubber marked with such print ink with improved wearability.

Silicone rubber keypads are used in cellular telephones, household remote control units, electronic calculators, and the like. The surface of such keypads is printed with an ink for silicone rubber. An example of such an ink for silicone rubber has been proposed in Japanese Application (Kokai) 56-163170, comprising an organopolysiloxane having at least two silanol groups per molecule, a polysiloxane with a low degree of polymerization or a silane having at least two moisture-hydrolyzable groups bonded to silicon atoms by means of nitrogen atoms or oxygen atoms per molecule, and a pigment.

A problem of silicone rubber moldings printed on the surface with such ink for silicone rubber, however, is that the printing tends to be worn away by friction from the fingertips when used and by friction from clothing. Therefore, it is an object of the present invention to provide an ink for silicone rubber affording print with better wearability on the surface of molded silicone rubber, as well as molded silicone rubber having such print with better wearability.

The present invention is an ink composition for silicone rubber comprising
(A) 100 weight parts organopolysiloxane having at least two silicon atom-bonded alkenyl groups per molecule,
(B) 0.01 to 50 weight parts organic compound having air oxidation-curable unsaturated groups,
(C) an organopolysiloxane having at least two silicon atom-bonded hydrogen atoms per molecule in an amount sufficient to effect curing of the ink composition,
(D) pigment or dye in an amount sufficient to color the ink composition, and
(E) platinum catalyst in an amount sufficient to effect curing of the ink composition; and molded silicone rubber printed with the ink composition.

The present invention is an ink composition for silicone rubber comprising
(A) 100 weight parts organopolysiloxane having at least two silicon atom-bonded alkenyl groups per molecule,
(B) 0.01 to 50 weight parts organic compound having air oxidation-curable unsaturated groups,
(C) an organopolysiloxane having at least two silicon atom-bonded hydrogen atoms per molecule in an amount sufficient to effect curing of the ink composition,
(D) pigment or dye in an amount sufficient to color the ink composition, and
(E) platinum catalyst in an amount sufficient to effect curing of the ink composition; and molded silicone rubber printed with the ink composition.

Component (A) is the principal component of the ink and is an organopolysiloxane having at least two silicon atom-bonded alkenyl groups per molecule. Examples of alkenyl groups in component (A) include vinyl, allyl, butenyl, pentenyl, and hexenyl. Vinyl is preferred. Examples of silicon atom-bonded organic groups other than alkenyls in component (A) include alkyl groups such as methyl, ethyl, propyl, and butyl; cycloalkyl groups such as cyclohexyl; aryl groups such as phenyl and tolyl; and optionally substituted monovalent hydrocarbon groups including haloalkyls such as 3-chloropropyl, 3,3,3-trifluoropropyl, and 3,3,4,4,4-pentafluorobutyl. Methyl and phenyl groups are preferred, especially methyl. The molecular structure of component (A) may be straight-chained, straight-chained with some branches, branched, or dendritic. Examples of such organopolysiloxanes include dimethylsiloxane end-blocked at both terminals with dimethylvinylsiloxy groups; dimethylsiloxane-methylvinylsiloxane copolymers end-blocked at both terminals with dimethylvinylsiloxy groups; dimethylsiloxane-methylvinylsiloxane copolymers end-blocked at both terminals with trimethylsiloxy groups; polymers consisting of (CH₃)₂(CH₂=CH)SiO_{1/2} units and SiO_{4/2} units; polymers consisting of (CH₃)₃SiO_{1/2} units, (CH₃)₂(CH₂=CH)SiO_{1/2} units, and SiO_{4/2} units; polymers consisting of (CH₃)₂(CH₂=CH)SiO_{1/2} units, (CH₃)₂SiO_{2/2} units, and CH₃SiO_{3/2} units; polymers consisting of(CH₃)(CH₂=CH)SiO_{2/2} units and CH₃SiO_{3/2} units; and organopolysiloxanes comprising the above organopolysiloxanes in which part or all of the methyl groups have been substituted with ethyl and phenyl groups.

Component (B) is a characteristic component for improving the wearability of the ink composition and is an organic compound having air oxidation-curable unsaturated groups. The organic compound of component (B) is not limited, provided that the unsaturated groups of the molecule react with oxygen in the air, resulting in curing. Specific examples include unsaturated higher fatty acids such as linolenic acid and linoleic acid; oils consisting of esters of glycerin and unsaturated higher fatty acids such as tung oil, linseed oil, and soybean oil; esters of alcohols and unsaturated higher fatty acids such as methyl linolenate and methyl linolate; and unsaturated hydrocarbons such as butadiene, pentadiene, or hexadiene, and polymers thereof. Linolenic acid, methyl linolenate, tung oil, butadiene, hexadiene, and polybutadienes are preferred.

The content of component (B) is 0.01 to 50 weight parts, and preferably 0.1 to 20 weight parts, per 100 weight parts component (A). If the content of component (B) is less than the aforementioned range, the wearability of the resulting print may not be improved. A content beyond 100 weight parts may result in the print separating from the molded silicone rubber.

Component (C) is for curing the ink composition and is an organopolysiloxane having at least two silicon atom-bonded hydrogen atoms per molecule. Examples of silicon atom-bonded organic groups in component (C) include alkyl groups such as methyl, ethyl, propyl, and butyl; cycloalkyl groups such as cyclohexyl; aryl groups such as phenyl and tolyl; and optionally substituted monovalent hydrocarbon groups including haloalkyls such as 3-chloropropyl, 3,3,3-trifluoropropyl, and 3,3,4,4,4-pentafluorobutyl. Methyl and phenyl groups are preferred, especially methyl. The molecular structure of component (C) may be straight-chained, straight-chained with some branches, branched, or dendritic. Examples of such organopolysiloxanes include dimethylpolysiloxane end-blocked at both terminals with dimethyl hydrido-siloxy groups; dimethylsiloxane-methyl hydrido-siloxane copolymers end-blocked at both terminals with dimethyl hydrido-siloxy groups; methyl hydrido-polysiloxanes end-blocked at both terminals with trimethylsiloxy groups; dimethylsiloxane-methyl hydrido-siloxane copolymers end-blocked at both terminals with trimethylsiloxy groups; cyclic methyl hydrido-polysiloxanes; polymers consisting of (CH₃)₂HSiO_{1/2} units and SiO_{4/2} units; polymers consisting of (CH₃)₃SiO_{1/2} units, (CH₃)₂HSiO_{1/2} units, and SiO_{4/2} units; and organopolysiloxanes comprising the above organopolysiloxanes in which part or all of the methyl groups have been substituted with ethyl or phenyl groups.

The content of component (C) is not limited, provided that the amount is sufficient to effect curing of the ink composition. Desirable amounts of component (C) provide a molar ratio of 0.4:1 to 50:1 between the number of moles of silicon atom-bonded hydrogen atoms in this component and the number of moles of silicon atom-bonded alkenyl groups in component (A). A ratio of 0.5:1 to 30:1 is even more desirable. When the content of component (C) is outside the aforementioned range, the resulting composition may not be sufficiently cured.

Component (D) is a pigment or dye for coloring the ink composition. Examples of pigments include inorganic pigments such as carbon black, red oxide, black iron oxide, ultramarine, titanium white, titanium yellow, aluminum powder, and bronze powder; organic pigments such as Disazo Yellow, Lake Red C, Brilliant Carmine 6B, Fast Rose, phthalocyanin blue, quinacridone, and fluorescent pigments; and bodying pigments such as mica powder, barite powder, precipitating barium sulfate, precipitating calcium carbonate, gypsum, clay, talc, and magnesium carbonate. Examples of dyes include azo, triphenylmethane, anthraquinone, and azine dyes.

The content of component (D) is an amount sufficient to effect coloring of the display component obtained using the ink. A desirable content is a range of 0.1 to 200 weight parts per 100 weight parts component (A). When the content of component (D) is below this range, the resulting print may not be very vivid, whereas a content higher than this range may result in the print separating from the silicone rubber.

Component (E) is a platinum catalyst for promoting the curing of the ink. Examples of platinum catalysts for component (E) include fine platinum metal powder, platinum black, chloroplatinic acid, platinum tetrachloride, alcohol solutions of chloroplatinic acid, olefin complexes of platinum, alkenylsiloxane complexes of platinum, and carbonyl complexes of platinum.

The content of component (E) is an amount sufficient to effect curing of the ink composition. A desirable amount, in units of weight, is 0.1 to 500 ppm platinum metal in the ink composition.

The present ink composition for silicon rubber is prepared by mixing the aforementioned components (A) through (E), but may also contain other optional components as needed, including reinforcing fillers such as fumed silica, precipitating silica, sintered silica, and fumed titanium; non-reinforcing fillers such as powdered quartz, diatomaceous earth, iron oxide, aluminum oxide, aluminosilicic acid, and calcium carbonate; fillers comprising such fillers surface treated with organic silicon compounds such as organochlorosilane, organoalkoxysilane, hexaorganodisilazane, and organohydridopolysiloxane; and addition reaction inhibitors including alkyne alcohols such as 3-methyl-1-butyn-3-ol; 3,5-dimethyl-1-hexyn-3-ol, and phenylbutynol; and -enyne compounds such as 3-methyl-3-penten-1-yne, and 3,5-dimethyl-3-hexen-1-yne; and such addition reaction inhibitors as tetramethyl tetrahexenyl cyclotetrasiloxane and benzotriazole.

The method for preparing the ink is not particularly limited. In one example, components (A) through (E) and other optional components as needed may be mixed to homogeneity using a known mixing kneader such as a two-roll Banbury mixer, kneader mixer, or planetary mixer. When reinforcing silica fillers are blended with the ink, component (A) and the reinforcing silica filler are preferably mixed while heated to prepare a silicone rubber base, and the other components are then blended in.

Examples of methods for printing the ink on the surface of the molded silicone rubber include screen printing, pad printing, dipping, and blowing. The ink may be left at room temperature or heated to allow it to cure more rapidly. When the ink is heated, it is preferably done so at a temperature of 40 to 150°C.

The present molded silicone rubber is characterized by being printed with the aforementioned ink composition for silicone rubber. Examples of molded silicone rubber in the present invention include silicone rubber obtained by curing silicone rubber compositions that are cured with organic peroxides, silicone rubber compositions that are cured by condensation reaction, or silicone rubber compositions that are cured by UV. The configuration of the molded silicone rubber is not particularly limited and may include, for example, sheets, blocks, rods, tubes, and coated films. Examples of such molded silicone rubber within the scope of the present invention include silicone rubber key pads for cellular telephones, household remote control pads, and electronic calculators; silicone rubber bathing caps; silicone rubber spatulas; silicone rubber pads; silicon rubber gaskets; silicone rubber coated wiring; and silicone rubber hoses.

A fuller understanding of the present ink composition for silicone rubber and the present molded silicone rubber is provided through the following examples. Physical properties were determined at 25°C.

Example 1. 70 Weight parts dimethylpolysiloxane end-blocked at both terminals with dimethylvinylsiloxy groups, having a viscosity of 10 Pa•s (vinyl group content = 0.135 wt%), 15 weight parts fumed silica with a BET specific area of 200 m²/g, 5 weight parts hexamethyldisilazane, and 1.5 weight parts water were introduced into a planetary mixer, and were heated and kneaded at 170°C in vacuo to prepare a silicone rubber base compound.

100 Weight parts of this silicone rubber base and 15 weight parts carbon black (electrolytic acetylene black by Denki Kagaku Kogyo) were then mixed to homogeneity using a three roll mill. 3 Weight parts tung oil, 0.22 weight part of a 2-ethylenehexanol solution of chloroplatinic acid (chloroplatinic acid content = 0.03 wt%), 2 weight parts dimethylsiloxane-methyl hydrido-siloxane copolymer (silicon atom-bonded hydrogen atom content = 0.80 wt%) end-blocked at both terminals with trimethylsiloxy groups, having a viscosity of 5 mPa•s (3.9 molar ratio of silicone atom-bonded hydrogen atoms in copolymer relative to vinyl groups in above dimethylpolysiloxane), and 0.01 weight part 3,5-dimethyl-1-hexyn-3-ol as a curing inhibitor were mixed to prepare an ink composition for silicone rubber.

The ink composition was screen printed to an ink thickness of 40 µm on a 2 mm thick silicone rubber sheet (prepared by curing SH851U, an organic peroxide-curable silicone rubber composition by Toray Dow Coming Silicone). The ink was then cured by heating for 1 hour in a 60°C oven to provide a test piece for wearability tests. The test piece was placed in a rubbing tester (by Taihei Rika Kogyo) in which an eraser with a surface diameter of 8 mm was moved reciprocally over the ink at 50 strokes per minute to assess the wearability of the printed ink. The assessment of the print wearability was based on the number of times required to erase the ink from the test sample. The results are given in Table 1.

Comparative Example 1. An ink for silicone rubber was prepared in the same manner as in Example 1 except that no rung oil was blended as in Example 1. This ink for silicone rubber was used to prepare printed silicone rubber in the same manner as in Example 1. The wearability of the print on this molded silicone rubber was assessed as described above. The results are given in Table 1.

**Table 1**

| | Example 1 | Comparative Example 1 |
|---|---|---|
| Print wearability (number of cycles lasted) | 2000 | 1000 |

## Claims

1. An ink composition for silicone rubber comprising
(A) 100 weight parts organopolysiloxane having at least two silicon atom-bonded alkenyl groups per molecule,
(B) 0.01 to 50 weight parts organic compound having air oxidation-curable unsaturated groups,
(C) an organopolysiloxane having at least two silicon atom-bonded hydrogen atoms per molecule in an amount sufficient to effect curing of the ink composition,
(D) pigment or dye in an amount sufficient to color the ink composition, and
(E) platinum catalyst in an amount sufficient to effect curing of the ink composition.

2. An ink composition for silicone rubber according to Claim 1, wherein component (B) is an unsaturated higher fatty acid, an unsaturated higher fatty acid ester, an unsaturated hydrocarbon compound, or a polymer thereof.

3. An ink composition for silicone rubber according to Claim 1, wherein component (B) is linolenic acid, methyl linolenate, tung oil, butadiene, hexanediene or polybutadiene.

4. An ink composition for silicone rubber according to any of Claims 1 to 3, comprising 0.1 to 20 weight parts of component (B) per 100 weight parts of component (A).

5. An ink composition for silicone rubber according to any of Claims 1 to 4, wherein the molar ratio of silicon-bonded hydrogen atoms provided by component (C) to the silicon-bonded alkenyl groups provided by component (A) is 0.4:1 to 50:1.

6. An ink composition for silicone rubber according to Claim 5, wherein the molar ratio of silicon-bonded hydrogen atoms provided by component (C) to the silicon-bonded alkenyl groups provided by component (A) is 0.5:1 to 30:1.

7. An ink composition for silicone rubber according to any of Claims 1 to 6, wherein component (D) is added in an amount of 0.1 to 200 weight parts per 100 weight parts of component (A).

8. A molded silicone rubber printed with an ink composition according to any of claims 1 to 7.
